(19) **Europäisches Patentamt**
**European Patent Office**
**Office européen des brevets**

(11) **EP 2 560 429 A1**

(12) **EUROPEAN PATENT APPLICATION**
published in accordance with Art. 153(4) EPC

(43) Date of publication:
**20.02.2013 Bulletin 2013/08**

(21) Application number: **11768401.9**

(22) Date of filing: **30.03.2011**

(51) Int Cl.:
***H04W 24/02*** (2009.01)

(86) International application number:
**PCT/CN2011/072284**

(87) International publication number:
**WO 2011/127789 (20.10.2011 Gazette 2011/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.04.2010 CN 201010145529**

(71) Applicant: **ZTE Corporation**
**Shenzhen, Guangdong 518057 (CN)**

(72) Inventors:
• **QIU, Wanbin**
**Shenzhen, Guangdong 518057 (CN)**

• **LUO, Liping**
**Shenzhen, Guangdong 518057 (CN)**
• **WANG, Kai**
**Shenzhen, Guangdong 518057 (CN)**
• **HE, Dongmei**
**Shenzhen, Guangdong 518057 (CN)**
• **ZHENG, Hao**
**Shenzhen, Guangdong 518057 (CN)**

(74) Representative: **Pons Ariño, Angel**
**Glorieta Ruben Dario 4**
**28010 Madrid (ES)**

(54) **METHOD AND APPARATUS FOR NEIGHBOR CELL OPTIMIZATION IN WIRELESS COMMUNICATION NETWORK**

(57) A neighbor cell optimization method for wireless communication network is provided in the present invention. The method includes the following steps: statistically calculating the level difference between a frequency point signal of a serving cell and any neighbor cell frequency point signal from its neighbor cells during a period of time, and obtaining the number of level difference grade samples by accumulating accounting according to the grade, and obtaining an interference index of this neighbor cell frequency point to the serving cell by processing the number of the level difference grade samples (S101); performing cell location to this neighbor cell frequency point signal by using a path loss location algorithm, to find located cells for this neighbor cell frequency point (S102); configuring the neighborhood relation for the serving cell according to the interference index, which is of the neighbor cell frequency point to the serving cell, and the located cells (S103). A neighbor cell optimization apparatus for wireless communication network is further provided in the present invention. By applying the technical solution provided in the present invention, the problem in the prior art that the work efficiency of the neighbor cell optimization mode is low and the accuracy is not high can be solved

statistically calculate the level difference between a signal of a serving cell frequency point and a signal of a neighbor cell frequency point in a neighbor cell during a period of time, perform a grade-based cumulative count to obtain a level difference grade sample number, and obtain an interference index by processing the level difference grade sample number — S101

perform cell positioning on the neighbor cell frequency point by using a path loss positioning algorithm to find a positioned cell — S102

configure a neighbor cell relation for the serving cell according to the interference index and the positioned cell of each neighbor cell frequency point — S103

**Fig. 1**

EP 2 560 429 A1

**Description**

**Field of the Invention**

The present invention relates to the field of optimization technologies for wireless communication networks, and in particular to a method and an apparatus for neighbor cell optimization in a wireless communication network.

**Background of the Invention**

With wireless communication technologies developing continuously and mobile services becoming diversified widely, users have higher and higher requirements on the quality of the wireless communication network. The wireless communication network goes through, from an initial construction stage to a final mature stage, a network planning stage, an engineering construction stage and a network optimization stage which is an important stage. Specifically, the network optimization is to collect data of a network in service and analyze the collected data to find the factors that degrade the quality of the network, and then to perform an adjustment on frequency design, base station parameters and network structure to achieve an optimal network running state so that the utilization of network resources can be optimized.

When a mobile station moves from the coverage area of one cell to the coverage area of another cell during a communication process, in order to guarantee the smooth switching of the serving cell of the mobile station and the quality of the communication, neighbor cells should be rationally configured for the serving cell in a wireless communication network, and the primary principle for the neighbor cell planning of the wireless communication network lies in that a neighbor cell relation is determined according to the distance between cells and a cell coverage range determined by the direction angles of the cells. As the reference data used in the initial planning stage of a network cannot reflect the real network running environment, in order to improve the quality of service of the network, it is required to implement network optimization, which comprises neighbor cell optimization.

For existing neighbor cell optimization, there exist the following several solutions:

Solution 1: manual optimization, which is based on the experience of network optimization engineers and limited manpower calculation;

Solution 2: optimization based on drive test data, this solution having the following defects: drive test is time-consuming and labor-consuming, and as data collection can only be performed on limited paths, the collected data are incomplete and small in quantity;

Solution 3: determine whether or not the configured neighbor cell relation is rational according to data such as the times of the switches that are attempted to be implemented between the serving cell of the existing network and a neighbor cell and the times of the switches that are successfully implemented, wherein the times data are collected by an operation and maintenance center; and consider deleting the neighbor cell relation if the neighbor cell relation is not rational. As the cell in the existing network that is configured with no neighbor cell relation cannot report relevant performance data, this solution is disadvantaged in that only a suggestion on the deletion of a configured neighbor cell can be given but the suggestion on the addition of a new neighbor cell is unavailable, therefore it is not a complete neighbor cell optimization.

Thus, in the existing neighbor cell optimization for a wireless communication network, one part of neighbor cell optimization process (delete a neighbor cell) is implemented according to performance data such as the switch of a neighbor cell, and another part of optimization process (add a neighbor cell) is manually implemented based on the experience of the network planning and optimizing engineers. This optimization mode is low in working efficiency and poor in the accuracy of the optimization result.

**Summary of the Invention**

In view of the above, the present invention mainly provides a method for neighbor cell optimization in a wireless communication network, which addresses the problem of low working efficiency and low accuracy existing in the conventional art.

The technical solution of the present invention is carried out as follows.

The present invention provides a method for neighbor cell optimization in a wireless communication network, comprising:

statistically calculating a level difference between a signal of a serving cell frequency point and a signal of any neighbor cell frequency point in a neighbor cell of a serving cell during a period of time, performing a grade-based cumulative count to obtain a level difference grade sample number, and obtaining an interference index of the neighbor cell frequency point to the serving cell by processing the level difference grade sample number;

performing a cell positioning on the neighbor cell frequency point by using a path loss positioning algorithm to find a positioned cell of the neighbor cell frequency point; and

configuring a neighbor cell relation of the serving cell according to the interference index of the neighbor cell frequency point to the serving cell and the positioned cell.

In the method, before the step of statistically calculating the level difference between the signal of the serving cell frequency point and the signal of any neighbor cell frequency point in the neighbor cell of the serving cell during the period of time, the method further comprises:

adding, in batches, a frequency point that is not currently contained in the neighbor cell relation to the neighbor cell relation of the serving cell through a broadcast control channel allocation scheduling, and receiving, by means of a mobile station, a signal of the serving cell to obtain the neighbor relation and receiving a level of the signal of the serving cell frequency point and a level of the signal of any neighbor cell frequency point in the neighbor cell of the serving cell.

In the method, the step of statistically calculating the level difference between the signal of the serving cell frequency point and the signal of any neighbor cell frequency point in the neighbor cell of the serving cell during the period of time, performing the grade-based cumulative count to obtain the level difference grade sample number, and obtaining the interference index of the neighbor cell frequency point to the serving cell by processing the level difference grade sample number comprises:

statistically calculating to obtain the level difference between the signal of the serving cell frequency point and the signal of any neighbor cell frequency point during the period of time, and performing grade-based cumulative count and storage to obtain at least one level difference grade sample number;

performing a noise filtering according to a sum of level difference grade sample numbers to reserve the level difference grade sample numbers of the neighbor cell frequency point representing a coverage relation; and

performing a curve-based interception on the level difference grade sample numbers that are reserved after the noise filtering to obtain weights of the level difference grade sample numbers, and performing a weighed summation to obtain a sum of the sample numbers, which are weighted according to grades of level differences, as the interference index of the signal of the neighbor cell frequency point to the serving cell.

In the method,

a condition for the noise filtering is $SNi < k * \sum_i SNi$, wherein SNi represents a total number of samples of a frequency point, and a value range of k is [0.05,0.3].

In the method,

the curve-based interception on effective sample points refers to an interception based on a normal distribution curve or a parabola.

In the method, the step of configuring the neighbor cell relation of the serving cell according to the interference index of the neighbor cell frequency point to the serving cell and the positioned cell comprises:

according to the positioned cell and the interference index of each neighbor cell frequency point and the number of neighbor cells that can be configured to have a neighbor cell relation with the serving cell, configuring the positioned cell having a great interference index to have the neighbor cell relation with the serving cell.

In the method, the step of performing the cell positioning on the neighbor cell frequency point by using the path loss positioning algorithm to find the positioned cell of the neighbor cell frequency point comprises:

calculating pass loss values of cells corresponding to the neighbor cell frequency point respectively to obtain a cell having the lowest pass loss value in the cells corresponding to the neighbor cell frequency point, and taking the cell having the lowest pass loss value as the positioned cell of the neighbor cell frequency point.

In the method, the path loss positioning algorithm comprises:

finding a list of cells having the same frequency point in the wireless communication network, and taking the list as an interference cell list;

calculating a distance D between each interference cell in the interference cell list and the serving cell, and selecting 2 to 5 interference cells that are closest to the serving cell;

calculating an included angle $\alpha$ between an antenna direction of the serving cell and a connection line of an interference cell and the serving cell in a clockwise direction and an included angle $\beta$ between an antenna direction of the interference cell and a connection line of the interference cell and the serving cell in the clockwise direction; and calculating the path loss value from the interference cell to the serving cell according to a path loss positioning formula PL (ICell dB)=32.44+20lg (f MHz) +k1*20lg (D km) +k2* $f$ $(\alpha)$+ k3* $f(\beta)$, comparing calculated path loss values, obtaining a cell having the smallest path loss value in the cells having the same frequency point, and taking the cell as the positioned cell of the neighbor cell frequency point.

In the method, in the path loss positioning formula, fMHz represents a frequency band a cell belongs to and is 900MHz or 1800 MHz; and $f$ (x) represents an attenuation value in a direction x of the antenna direction.

In the method, in the path loss positioning formula, value ranges of k1, k2 and k3 are respectively [1, 2.5], [0.3, 0.9] and [0.8, 1.5].

The present invention also provides an apparatus for neighbor cell optimization in a wireless communication network, comprising:

a data processing unit, configured to statistically calculate a level difference between a signal of a serving cell frequency point and a signal of any neighbor cell frequency point in a neighbor cell of a serving cell during a period of time, perform a grade-based cumulative count to obtain a level difference grade sample number, and obtain an interference index of the neighbor cell frequency point to the serving cell by processing the level difference grade sample number;

a path loss positioning unit, configured to perform a cell positioning on the neighbor cell frequency point by using a path loss positioning algorithm to find a positioned cell of the neighbor cell frequency point; and

a neighbor cell configuration unit, configured to configure a neighbor cell relation of the serving cell according to the interference index of the neighbor cell frequency point to the serving cell and the positioned cell.

In the apparatus, the data processing unit further comprises:

a noise filtering module, configured to perform a noise filtering according to a total number of samples obtained by summing up level difference grade sample numbers, and reserve the level difference grade sample numbers of the neighbor cell frequency point representing a coverage relation; and

a weighted summation module, configured to perform a curve-based interception on the level difference grade sample numbers obtained by the noise filtering module to obtain weights of the level difference grade sample numbers, and perform a weighed summation to obtain a sum of the sample numbers, which are weighted according to grades of level differences, as the interference index of the signal of the neighbor cell frequency point to the serving cell.

In the apparatus, the curve-based interception performed by the weighted summation module on effective sample points refers to an interception based on a normal distribution curve or a parabola.

In the apparatus, the neighbor cell configuration unit is configured to: according to the positioned cell and the interference index of the neighbor cell frequency point to the serving cell and the number of neighbor cells that can be configured to have a neighbor cell relation with the serving cell, configure the positioned cell having a great interference index to have the neighbor cell relation with the serving cell.

In the apparatus, the path loss positioning unit is configured to calculate pass loss values of cells corresponding to the neighbor cell frequency point respectively to obtain a cell having the lowest pass loss value in the cells corresponding to the neighbor cell frequency point, and take the cell having the lowest pass loss value as the positioned cell of the neighbor cell frequency point.

In the apparatus, the path loss positioning unit further comprises:

an interference cell list obtaining module, configured to find a list of cells having the same frequency point in the wireless communication network, and take the list as an interference cell list; and

a path loss positioning module, configured to calculate the path loss values from 2 to 5 interference cells that are closest to the serving cell to the serving cell according to the interference cell list and a path loss positioning formula PL (ICell dB)=32.44+20lg (f MHz) +k1*20lg (D km) +k2*$f(\alpha)$+ k3*$f(\beta)$, compare the path loss values, obtain a cell having the smallest path loss value in the cells having the same frequency point, and take the cell as the positioned cell of the neighbor cell frequency point.

In the apparatus, in the path loss positioning formula used by the path loss positioning module, fMHz represents a frequency band a cell belongs to and is 900MHz or 1800 MHz; $f(x)$ represents an attenuation value in a direction x of the antenna direction; and value ranges of k1, k2 and k3 are respectively [1, 2.5], [0.3, 0.9] and [0.8, 1.5].

Compared with the conventional art, the present invention has beneficial effects as follows.

1. In the method provided herein for the neighbor cell optimization in a wireless communication network, the level of the signal of a neighbor cell frequency point is collected through a Broadcast Control Channel Allocation (BCCH Allocation, BA, BCCH) scheduling, a statistical calculation and a grade-based cumulative count are performed to obtain a level difference grade sample number, the level difference grade sample number is processed to obtain an interference index of the neighbor cell frequency point to a serving cell, the cell having the lowest path loss value in a neighbor cell frequency point is positioned by a path loss positioning algorithm as a positioned cell, and a neighbor cell relation is configured for the serving cell according to the interference index. Therefore, in comparison with the manual optimization, the method provided by the present invention is higher in working efficiency and more accurate in the result of the neighbor cell optimization as in the method,

2. In comparison with the neighbor cell optimization based on switching data, the method provided herein for the neighbor cell optimization in a wireless communication network is capable of collecting data initiatively to find faults in advance and is therefore higher in efficiency.

3. In comparison with the neighbor cell optimization based on drive test data, the method provided herein for the neighbor cell optimization in a wireless communication network reduces the manpower cost, financial cost and time cost needed by a drive test and provides a more accurate optimization result because the data collected by a BCCH Allocation scheduling can reflect network conditions more comprehensively.

## Brief Description of the Drawings

Fig. 1 is a schematic diagram illustrating the flow of the method provided in an embodiment of the present invention for the neighbor cell optimization in a wireless communication network;

Fig. 2 is a schematic diagram illustrating the structure of the apparatus provided in an embodiment of the present invention for the neighbor cell optimization in a wireless communication network; and

Fig. 3 is a schematic diagram illustrating the included angle between the antenna direction of a serving cell and the connection line of an interference cell and the serving cell in the clockwise direction according to an embodiment of the present invention.

## Detailed Description of the Embodiments

The basic idea of the embodiments of the present invention lies in that a level difference between a signal of a serving cell frequency point and a signal of any neighbor cell frequency point in a neighbor cell of a serving cell during a period of time is statistically calculated, a grade-based cumulative count is performed to obtain a level difference grade sample number, an interference index of the neighbor cell frequency point to the serving cell is obtained by processing the level difference grade sample number; a cell positioning is performed on the neighbor cell frequency point by using a path loss positioning algorithm to find a positioned cell for the neighbor cell frequency point; and a neighbor cell relation is configured for the serving cell according to the interference index of the neighbor cell frequency point to the serving cell and the positioned cell.

The present invention is described in detail below with reference to accompanying drawings when read in conjunction with specific embodiments.

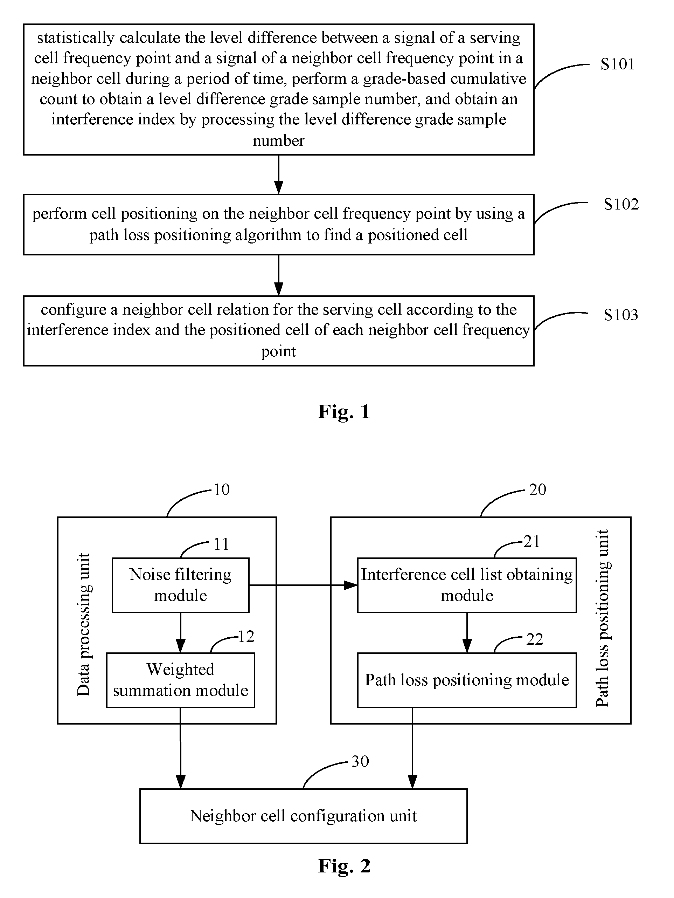

Fig. 1 is a schematic diagram illustrating the flow of the method provided in an embodiment of the present invention for the neighbor cell optimization in a wireless communication network. As shown in Fig. 1, the method comprises the steps as follows.

Step S101: a level difference between a signal of a serving cell frequency point and a signal of a neighbor cell frequency point is statistically calculated, a grade-based cumulative count is performed to obtain a level difference grade sample number, and an interference index is obtained by processing the level difference grade sample number.

Specifically, the level of the signal of the neighbor cell frequency point is collected during a period of time (determined according to the actual running condition of the wireless communication network or the needs of the user) through a BA scheduling of the whole network, the level difference between the signal of the neighbor cell frequency point and the signal of the serving cell frequency point is obtained through calculation, a grade-based cumulative count is performed to the level difference to obtain the level difference grade sample numbers of different grades, and the level difference grade sample numbers are processed to obtain the interference index of the neighbor cell frequency point to the serving cell. There is at least one level difference grade sample number.

First, a BA scheduling is performed on the whole network to add, in batches, the frequency points that are not currently contained in the neighbor cell relation of the serving cell to the neighbor cell relation of the serving cell, so that neighbor cell frequency points comprise those that are not originally neighbor cell frequency points (usually, one day is needed to add a batch of frequency points to the neighbor cell relation for a level collection during the BA scheduling, and about one week is needed to complete the whole BA scheduling). A mobile station receives a signal of the serving cell to obtain the neighbor cell relation, receives the levels of the neighbor cell frequency point signals in the neighbor cell relation of the serving cell and the level of the serving cell frequency point signal, calculates to obtain the level difference between each frequency point signal and the serving cell frequency point signal, and performs a grade-based cumulative count to the level difference. By taking 32 level difference grades, i.e. c0-c31, as an example, c0 represents the level difference grade sample number with a level difference of -10dB and below, c1 represents the level difference grade sample number with a level difference of -10dB to -9dB, and so on and so forth, c31 represents the level difference grade sample number with a level difference of 21 dB and above.

Then, a noise filtering is performed on the frequency points according to the sum of the level difference grade sample numbers, that is, the total number of samples, the level difference grade sample numbers of the neighbor cell frequency points capable of representing a coverage relation are reserved, at this time, c0-c31 represent the level difference grade sample numbers of the neighbor cell frequency points that are reserved after the noise filtering, wherein the condition for the noise filtering is $SNi < k * \sum_i SNi$ , wherein SNi represents the total number of samples of the frequency points, and the value range of k is [0.05,0.3].

At last, a curve-based interception is performed on the obtained level difference grade sample numbers according to the interference to the serving cell represented by the level differences to obtain the weights of the level difference grade sample numbers. For instance, the level difference grade sample number representing a small level difference, that is, a great interference to the serving cell, is endowed with a weight of approximate to 1, and the level difference grade sample number representing a great level difference, that is, a small interference to the serving cell, is endowed with a weight of approximate to 0, and the level difference grade sample numbers representing intermediate level differences are endowed with corresponding weights according to the form of the curve the distribution of the level difference grade sample numbers follows. There are many curve-based interception methods among which interceptions based on a straight line, a parabola and a normal distribution curve are respectively described below.

1) Interception based on a straight line: in which it is assumed that the sample points of the level differences of respective grades nearby a center point are substantially equal, and the interception curve is expressed as follows:

$$\begin{cases} y = 1, & (x < \mu - \delta) \\ y = -\dfrac{1}{2\delta}x + \dfrac{\mu + \delta}{2\delta}, & (x \in [\mu - \delta, \mu + \delta]) \\ y = 0, & (x > \mu + \delta) \end{cases} .$$

This method is simple in calculation and high in speed but is poor in accuracy in most cases.

2) Interception based on a parabola: this interception has a higher accuracy than the interception based on a straight line. A cubic curve exists in the range $x \in [\mu - \delta, \mu + \delta]$. For instance, when the mean axis is $\mu$=22, $\delta$=2 (the distance to the intersection with the axis x is 4), the interception curve is expressed as follows:

$$y = \frac{1}{32}x^3 - \frac{33}{16}x^2 + 45x - 324 .$$

3) Interception based on a normal distribution curve: this method is low in efficiency but high in accuracy, due to the fact that a preset function can be called for the normal distribution, this method can be realized more simply with an unchanged accuracy, in order to improve the efficiency, table lookup can be adopted. Thus, the interception based on a normal distribution curve is adopted in the embodiments of the present invention to intercept effective sample points. The curve intercepted in the range $x \in [\mu - \delta, \mu + \delta]$ is expressed as follows:

$$y_N = 1 - \int_0^i \frac{1}{\delta\sqrt{2\pi}} e^{\frac{-(x-\mu)^2}{2\delta^2}} \quad (i \in Z, i \in [0,31])$$

wherein $\mu$ and $\delta$ can be adjusted according to the needs of the user (typically, the adjustment should accord with the actual data distribution, $\mu$ corresponds to the distribution center of data, and $\delta$ corresponds to the degree of concentration of data). The weighted normalized summation function for corresponding effective sample points is as follows:

$$Interfering = \sum_i [y_N * Ci]$$

wherein Ci is the level difference grade sample number of effective sample points.

A description is given here by taking the graded level difference c20 (that is, level difference is 10dB) as a center point and a deviation range of -4dB to 4dB as an example, '$\mu$=20, $\delta$=4' is substituted in the normalized summation function, the normal functional integration part is substituted by a normal distribution accumulation function NORMDIST, then the following formula is obtained:

$$Interfering = \sum_i [(1 - NORMDIST(i, 20, 4)) * Ci]$$

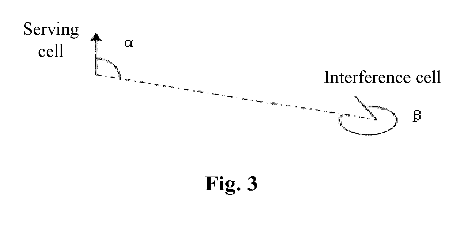

wherein Ci is the level difference grade sample number of effective sample points.
The *Interfering* in the expression above, which represents the total number of the samples weighted according to the grades of the level differences, is the interference index of the signal of the neighbor cell frequency point to the serving cell, the greater the *Interfering* is, the higher the interference the neighbor cell point cell to the serving cell is.
Step S102: a cell positioning is performed on the signal of the neighbor cell frequency point by using a path loss positioning algorithm to obtain a positioned cell.
Specifically, the path loss positioning algorithm is used to perform the cell positioning on the neighbor cell frequency point having the interference index calculated in Step S101, the path loss values of the cells corresponding to the neighbor cell frequency point are calculated to obtain the cell having the lowest path loss value, and the cell having the lowest path loss value is then taken as a positioned cell of the neighbor cell frequency point.
In this step, a list of cells having the same frequency point in the wireless communication network is taken as an interference cell list, the distance D between each interference cell in the interference cell list and the serving cell is calculated, 2 to 5 cells that are closest to the serving cell are selected, the included angle $\alpha$ between the antenna direction of the serving cell and the connection line of an interference cell and the serving cell in the clockwise direction and the included angle $\beta$ (refer to Fig. 3) between the antenna direction of the interference cell and the connection line of the interference cell and the serving cell in the clockwise direction are calculated, and the path loss values of the cells are calculated using a path loss positioning formula and then compared to select the cell having the lowest path loss value as the positioned cell of the neighbor cell frequency point.
The path loss positioning formula is:

$$PL \ (ICell \ dB) = 32.44 + 20lg \ （f \ MHz）$$
$$+k1*20lg \ （D \ km） +k2*f(\alpha)+ k3*f(\beta),$$

wherein

fMHz represents the frequency band a cell belongs to, and fMHz is equal to 900 or 1800 in the embodiments of the present invention;

Dkm represents the distance between an interference cell and the serving cell; and

$f(x)$ represents the attenuation value in the horizontal direction of an antenna, that is, in the direction x; and $f(x)$ is equal to 0 for an omni-directional station.

Value ranges of coefficients k1, k2 and k3 are respectively [1, 2.5], [0.3 0.9] and [0.8, 1.5], and the optimal values of the three coefficients can be determined by the user based on different network environments.

Step S103: a neighbor cell relation is configured for the serving cell according to the interference index and the positioned cell of each neighbor cell frequency point.

Specifically, the interference index values are ordered from the highest to the lowest according to the interference index and the positioned cell of each neighbor cell frequency point and the maximum preset number of the cells that can be configured as neighbor cells of the serving cell, and the positioned cells with a great interference index are configured to have a neighbor cell relation with the serving cell according to the maximum number of the cells which can be configured to have a neighbor cell relation with the serving cell.

The configuration method is specifically as follows: if a cell which has been configured to have a neighbor cell relation with the serving cell exists in the positioned cells having a great interference index, then the neighbor cell relation is reserved; if a cell which has been configured to have a neighbor cell relation with the serving cell is not in the positioned cells having a great interference index, then the neighbor cell relation is deleted; and if the positioned cells having a great interference index are not configured to have a neighbor cell relation with the serving cell, then the neighbor cell relation is added.

Fig. 2 is a schematic diagram illustrating the structure of the apparatus provided in an embodiment of the present invention for the neighbor cell optimization in a wireless communication network. As shown in Fig. 2, the apparatus comprises a data processing unit 10 configured to calculate to obtain the interference index of a neighbor cell frequency point to a serving cell, a path loss positioning unit 20 configured to perform a cell positioning on the neighbor cell frequency point, and a neighbor cell configuration unit 30.

The data processing unit 10 further comprises: a noise filtering module 11 and a weighted summation module 12, wherein

the noise filtering module 11 is configured to perform a noise filtering according to the sum of the level difference grade sample numbers (i.e., the total number of samples) and reserve the level difference grade sample numbers of a neighbor cell frequency point capable of representing a coverage relation. The level difference grade sample numbers are obtained in the following way: the level of the signal of the neighbor cell frequency point is collected using the BA scheduling during a period of time (determined according to the actual running condition of the wireless communication network or the needs of the user, and usually, one day is needed to add a batch of frequency points to the neighbor cell relation for a level collection during the BA scheduling, and about one week is needed to complete the whole BA scheduling); the data processing unit 10 statistically calculates the level difference between a signal of a serving cell frequency point and a signal of any neighbor cell frequency point in a neighbor cell of the serving cell, and performs a grade-based cumulative count to obtain the level difference grade sample number, wherein there is at least one level difference grade sample number. The condition for the noise filtering is $SNi < k * \sum\limits_{i} SNi$, wherein SNi represents the total number of samples of the frequency points, and the value range of k is [0.05, 0.3].

The weighted summation module 12 is configured to perform a curve-based interception on the level difference grade sample numbers obtained by the noise filtering module 11 according to the interference to the serving cell represented by the level difference to obtain the weights of the level difference grade sample numbers, and perform a weighed summation to obtain the sum of the samples that are weighted according to the grades of the level differences, that is, to obtain the interference index of the signal of the neighbor cell frequency point to the serving cell. The curve-based interception can be an interception based on a straight line, a parabola or a normal distribution curve, and the interception based on a normal distribution curve is adopted in the preferable embodiments of the present invention.

The path loss positioning unit 20 further comprises: an interference cell list obtaining module 21 and a path loss positioning module 22, wherein

the interference cell list obtaining module 21 is configured to: according to the neighbor cell frequency point corresponding to the level difference grade sample number obtained by the noise filtering module 11, find the cells having the same frequency point in the wireless communication network and take the list of the found cells as an interference cell list; the path loss positioning module 22 is configured to: according to the interference cell list obtained by the interference cell list obtaining module 21, calculate the distance D between each interference cell in the interference cell list and the serving cell and select 2 to 5 cells that are closest to the serving cell, calculate the included angle $\alpha$ between the antenna direction of the serving cell and the connection line of an interference cell and the serving cell in the clockwise direction and the included angle β (refer to Fig. 3) between the antenna direction of the interference cell and the connection line of the interference cell and the serving cell in the clockwise direction, calculate the path loss values of the cells using a path loss positioning algorithm and then compare the calculated path loss values to select the cell having the lowest path loss value as a positioned cell of the neighbor cell frequency point.

The path loss positioning algorithm is:

$$PL \text{ (ICell dB)}=32.44+20\lg（f\text{ MHz}）$$

$$+k1*20\lg（D\text{ km}）+k2*f(\alpha)+k3*f(\beta),$$

wherein

fMHz represents the frequency band a cell belongs to, and f is equal to 900 or 1800 in the embodiments of the present invention;
Dkm represents the distance between an interference cell and the serving cell; and
f (x) represents the attenuation value in the horizontal direction of an antenna, that is, in the direction x; and $f$ (x) is equal to 0 for an omnidirectional station.

Value ranges of coefficients k1, k2 and k3 are [1, 2.5], [0.3, 0.9] and [0.8, 1.5], and the optimal values of the three coefficients can be determined by the user based on different network environments.

The neighbor cell configuration unit 30 obtains the positioned cells positioned by the path loss positioning module 22, obtains the interference indexes of the frequency point signals of the positioned cells to the serving cell from the weighted summation module 12 according to the frequency points of the positioned cells, and configures the positioned cell having a great interference index to have a neighbor cell relation with the serving cell according to the maximum preset number of the cells that can be configured to have the neighbor cell relation with the serving cell. Specifically, if a cell which has been configured to have a neighbor cell relation with the serving cell exists in the positioned cells having a great interference index, then the neighbor cell relation is reserved; if a cell which has been configured to have a neighbor cell relation with the serving cell is not in the positioned cells having a great interference index, then the neighbor cell relation is deleted; and if the positioned cells having a great interference index are not configured to have a neighbor cell relation with the serving cell, then the neighbor cell relation is added.

In accordance with the method and apparatus for neighbor cell optimization in the wireless communication network, by processing the levels of the frequency point signals that are collected during a period of time through the BCCH scheduling of the whole network, the interference index of a signal of a neighbor cell frequency point to a serving cell is obtained, and the positioned cell of the neighbor cell frequency point is positioned by using a path loss positioning algorithm, and a neighbor cell relation is configured for the serving cell according to the interference index and the maximum number of the cells that can be configured to have a neighbor cell relation with the serving cell. The method and apparatus achieve a high efficiency at a low cost, and the optimization result is more accurate due to the fact that the collected data are more comprehensive. Moreover, the method and apparatus can achieve a completer neighbor cell optimization with a capability of deleting an inappropriate neighbor cell relation and adding a new neighbor cell relation.

The mentioned above is only preferable embodiments of the present invention, it should be appreciated that various modification and improvements can be devised by those skilled in the art without departing from the scope of the principles of the present invention, and that all the devised modifications and improvements belong to the scope of the protection of the present invention.

**Claims**

1. A method for neighbor cell optimization in a wireless communication network, **characterized by** comprising:

statistically calculating a level difference between a signal of a serving cell frequency point and a signal of any neighbor cell frequency point in a neighbor cell of a serving cell during a period of time, performing a grade-based cumulative count to obtain a level difference grade sample number, and obtaining an interference index of the neighbor cell frequency point to the serving cell by processing the level difference grade sample number;
performing a cell positioning on the neighbor cell frequency point by using a path loss positioning algorithm to find a positioned cell of the neighbor cell frequency point; and
configuring a neighbor cell relation of the serving cell according to the interference index of the neighbor cell frequency point to the serving cell and the positioned cell.

2. The method according to claim 1, **characterized in that** before the step of statistically calculating the level difference between the signal of the serving cell frequency point and the signal of any neighbor cell frequency point in the neighbor cell of the serving cell during the period of time, the method further comprises:

adding, in batches, a frequency point that is not currently contained in the neighbor cell relation to the neighbor cell relation of the serving cell through a broadcast control channel allocation scheduling, and a mobile station receiving a signal of the serving cell to obtain the neighbor relation and receiving a level of the signal of the serving cell frequency point and a level of the signal of any neighbor cell frequency point in the neighbor cell of the serving cell.

3. The method according to claim 1, **characterized in that** the step of statistically calculating the level difference between the signal of the serving cell frequency point and the signal of any neighbor cell frequency point in the neighbor cell of the serving cell during the period of time, performing the grade-based cumulative count to obtain the level difference grade sample number, and obtaining the interference index of the neighbor cell frequency point to the serving cell by processing the level difference grade sample number comprises:

statistically calculating to obtain the level difference between the signal of the serving cell frequency point and the signal of any neighbor cell frequency point during the period of time, and performing grade-based cumulative count and storage to obtain at least one level difference grade sample number;
performing a noise filtering according to a sum of level difference grade sample numbers to reserve the level difference grade sample numbers of the neighbor cell frequency point representing a coverage relation; and performing a curve-based interception on the level difference grade sample numbers that are reserved after the noise filtering to obtain weights of the level difference grade sample numbers, and performing a weighed summation to obtain a sum of the sample numbers, which are weighted according to grades of level differences, as the interference index of the signal of the neighbor cell frequency point to the serving cell.

4. The method according to claim 3, **characterized in that**

a condition for the noise filtering is $SNi < k * \sum_i SNi$ , wherein SNi represents a total number of samples of a frequency point, and a value range of k is [0.05,0.3].

5. The method according to claim 3, **characterized in that**
the curve-based interception on effective sample points refers to an interception based on a normal distribution curve or a parabola.

6. The method according to claim 1, **characterized in that** the step of configuring the neighbor cell relation of the serving cell according to the interference index of the neighbor cell frequency point to the serving cell and the positioned cell comprises:

according to the positioned cell and the interference index of each neighbor cell frequency point and the number of neighbor cells that can be configured to have a neighbor cell relation with the serving cell, configuring the positioned cell having a great interference index to have the neighbor cell relation with the serving cell.

7. The method according to any one of claims 1 to 6, **characterized in that** the step of performing the cell positioning on the neighbor cell frequency point by using the path loss positioning algorithm to find the positioned cell of the neighbor cell frequency point comprises:

calculating pass loss values of cells corresponding to the neighbor cell frequency point respectively to obtain a cell having the lowest pass loss value in the cells corresponding to the neighbor cell frequency point, and taking the cell having the lowest pass loss value as the positioned cell of the neighbor cell frequency point.

8. The method according to claim 7, **characterized in that** the path loss positioning algorithm comprises:

finding a list of cells having the same frequency point in the wireless communication network, and taking the list as an interference cell list;
calculating a distance D between each interference cell in the interference cell list and the serving cell, and selecting 2 to 5 interference cells that are closest to the serving cell;

calculating an included angle $\alpha$ between an antenna direction of the serving cell and a connection line of an interference cell and the serving cell in a clockwise direction and an included angle $\beta$ between an antenna direction of the interference cell and a connection line of the interference cell and the serving cell in the clockwise direction; and

calculating the path loss value from the interference cell to the serving cell according to a path loss positioning formula PL (ICell dB)=32.44+20lg (f MHz) +k1*20lg (D km) +k2* $f(\alpha)$+ k3* $f(\beta)$, comparing calculated path loss values, obtaining a cell having the smallest path loss value in the cells having the same frequency point, and taking the cell as the positioned cell of the neighbor cell frequency point.

9. The method according to claim 8, **characterized in that** in the path loss positioning formula, fMHz represents a frequency band a cell belongs to and is 900MHz or 1800 MHz; and $f(x)$ represents an attenuation value in a direction x of the antenna direction.

10. The method according to claim 8, **characterized in that** in the path loss positioning formula, value ranges of k1, k2 and k3 are respectively [1, 2.5], [0.3, 0.9] and [0.8, 1.5].

11. An apparatus for neighbor cell optimization in a wireless communication network, **characterized by** comprising:

   a data processing unit, configured to statistically calculate a level difference between a signal of a serving cell frequency point and a signal of any neighbor cell frequency point in a neighbor cell of a serving cell during a period of time, perform a grade-based cumulative count to obtain a level difference grade sample number, and obtain an interference index of the neighbor cell frequency point to the serving cell by processing the level difference grade sample number;

   a path loss positioning unit, configured to perform a cell positioning on the neighbor cell frequency point by using a path loss positioning algorithm to find a positioned cell of the neighbor cell frequency point; and

   a neighbor cell configuration unit, configured to configure a neighbor cell relation of the serving cell according to the interference index of the neighbor cell frequency point to the serving cell and the positioned cell.

12. The apparatus according to claim 11, **characterized in that** the data processing unit further comprises:

   a noise filtering module, configured to perform a noise filtering according to a total number of samples obtained by summing up level difference grade sample numbers, and reserve the level difference grade sample numbers of the neighbor cell frequency point representing a coverage relation; and

   a weighted summation module, configured to perform a curve-based interception on the level difference grade sample numbers obtained by the noise filtering module to obtain weights of the level difference grade sample numbers, and perform a weighed summation to obtain a sum of the sample numbers, which are weighted according to grades of level differences, as the interference index of the signal of the neighbor cell frequency point to the serving cell.

13. The apparatus according to claim 12, **characterized in that** the curve-based interception performed by the weighted summation module on effective sample points refers to an interception based on a normal distribution curve or a parabola.

14. The apparatus according to claim 11, **characterized in that** the neighbor cell configuration unit is configured to: according to the positioned cell and the interference index of the neighbor cell frequency point to the serving cell and the number of neighbor cells that can be configured to have a neighbor cell relation with the serving cell, configure the positioned cell having a great interference index to have the neighbor cell relation with the serving cell.

15. The apparatus according to any one of claims 11 to 14, **characterized in that** the path loss positioning unit is configured to calculate pass loss values of cells corresponding to the neighbor cell frequency point respectively to obtain a cell having the lowest pass loss value in the cells corresponding to the neighbor cell frequency point, and take the cell having the lowest pass loss value as the positioned cell of the neighbor cell frequency point.

16. The apparatus according to claim 15, **characterized in that** the path loss positioning unit further comprises:

   an interference cell list obtaining module, configured to find a list of cells having the same frequency point in the wireless communication network, and take the list as an interference cell list; and

a path loss positioning module, configured to calculate the path loss values from 2 to 5 interference cells that are closest to the serving cell to the serving cell according to the interference cell list and a path loss positioning formula PL (ICell dB)=32.44+20lg (f MHz) +k1*20lg (D km) +k2*$f(\alpha)$+ k3*$f(\beta)$, compare the path loss values, obtain a cell having the smallest path loss value in the cells having the same frequency point, and take the cell as the positioned cell of the neighbor cell frequency point.

17. The apparatus according to claim 16, **characterized in that** in the path loss positioning formula used by the path loss positioning module, fMHz represents a frequency band a cell belongs to and is 900MHz or 1800 MHz; $f(x)$ represents an attenuation value in a direction x of the antenna direction; and value ranges of k1, k2 and k3 are respectively [1, 2.5], [0.3, 0.9] and [0.8, 1.5].

statistically calculate the level difference between a signal of a serving cell frequency point and a signal of a neighbor cell frequency point in a neighbor cell during a period of time, perform a grade-based cumulative count to obtain a level difference grade sample number, and obtain an interference index by processing the level difference grade sample number

S101

perform cell positioning on the neighbor cell frequency point by using a path loss positioning algorithm to find a positioned cell

S102

configure a neighbor cell relation for the serving cell according to the interference index and the positioned cell of each neighbor cell frequency point

S103

**Fig. 1**

10

20

Data processing unit

11

Noise filtering module

12

Weighted summation module

Path loss positioning unit

21

Interference cell list obtaining module

22

Path loss positioning module

30

Neighbor cell configuration unit

**Fig. 2**

**Fig. 3**

# INTERNATIONAL SEARCH REPORT

| International application No. |
|---|
| PCT/CN2011/072284 |

**A. CLASSIFICATION OF SUBJECT MATTER**

H04W 24/02 (2009.01) i

According to International Patent Classification (IPC) or to both national classification and IPC

**B. FIELDS SEARCHED**

Minimum documentation searched (classification system followed by classification symbols)

IPC: H04L/-, H04Q7/-, H04W/-

Documentation searched other than minimum documentation to the extent that such documents are included in the fields searched

Electronic data base consulted during the international search (name of data base and, where practicable, search terms used)

WPI, VEN, CPRS, CNTXT, CNKI: neighbor, neighbour, neighboring, neighbouring, adjacent, cell, optimizing, optimization, optimize

**C. DOCUMENTS CONSIDERED TO BE RELEVANT**

| Category* | Citation of document, with indication, where appropriate, of the relevant passages | Relevant to claim No. |
|---|---|---|
| PX | CN101778412A (HUAWEI TECHNOLOGIES CO., LTD.) 14 July 2010 (14.07.2010) | 1-17 |
| A | CN 1604660A (HUAWEI TECHNOLOGIES CO., LTD.) 06 Apr. 2005 (06.04.2005) | 1-17 |
| | the abstract, claim 1, page 1,line 4-page 3,line 11 of the specification | |
| A | CN1413035A (SHANGHAI DATANG MOBILE COMMUNICATION EQU) | 1-17 |
| | 23 Apr.2003 (23.04.2003) | |
| | the abstract, claim 1 | |

☒ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 28 June 2011 (28.06.2011) | **07 Jul. 2011 (07.07.2011)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br>WU, Xinghua<br>Telephone No. (86-10)62411371 |
|---|---|

Form PCT/ISA /210 (second sheet) (July 2009)

# INTERNATIONAL SEARCH REPORT

International application No.

PCT/CN2011/072284

C (Continuation).     DOCUMENTS CONSIDERED TO BE RELEVANT

| Category* | Citation of document, with indication, where appropriate, of the relevant passages | Relevant to claim No. |
|---|---|---|
| A | CN1553609A (ZTE CORPORATION) 08 Dec. 2004 (08.12.2004)<br>the abstract, claims 1-6, fig.2 | 1-17 |
| A | CN101640873A (BEIJING T3G TECHNOLOGY CO LTD) 03 Feb. 2010 (03.02.2010)<br>the whole document | 1-17 |
| A | CN101369822A (DATANG MOBILE COMM EQUIP CO)    18 Feb. 2009 (18.02.2009)<br>the abstract, claims 1,7 | 1-17 |
| A | EP 2083595A1 (NOKIA SIEMENS NETWORKS OY)    29 July 2009 (29.07.2009)<br>the whole document | 1-17 |
| A | ZHOU, Xiaopeng,   Research and application on neighbor cell optimization solution in<br>WCDMA mobile communication system, 31 Dec. 2009 (31.12.2009), pages 17-36,<br>CNKI:CDMD:2.2009.017207 | 1-17 |

Form PCT/ISA/210 (continuation of second sheet ) (July 2009)

<div align="center">

**INTERNATIONAL SEARCH REPORT**
Information on patent family members

</div>

| | | International application No. |
|---|---|---|
| | | PCT/CN2011/072284 |

| Patent Documents referred in the Report | Publication Date | Patent Family | Publication Date |
|---|---|---|---|
| CN 101778412 A | 14.07.2010 | None | |
| CN 1604660 A | 06.04.2005 | CN100344167C | 17.10.2007 |
| CN 1413035A | 23.04.2003 | CN 1171473 C | 13.10.2004 |
| CN 1553609 A | 08.12.2004 | CN 100486380 C | 06.05.2009 |
| CN 101640873 A | 03.02.2010 | None | |
| CN 101369822 A | 18.02.2009 | None | |
| EP 2083595A1 | 29.07.2009 | None | |

Form PCT/ISA /210 (patent family annex) (July 2009)